# EUROPEAN PATENT SPECIFICATION

(11) **EP 4 405 662 B1**
(45) Date of publication and mention of the grant of the patent: **25.06.2025**
(21) Application number: 22769107.8
(22) Date of filing: 22.08.2022
(51) Int. Cl.: G01N 21/15, G01N 21/85

(54) **CLEANING SYSTEM FOR PROBE UNIT**
REINIGUNGSSYSTEM FÜR SONDENEINHEIT
SYSTÈME DE NETTOYAGE POUR UNITÉ DE SONDE

(30) Priority: 24.09.2021 NO 20211146
(43) Date of publication of application: 31.07.2024
(73) Proprietor: ProAnalysis AS, 5006 Bergen (NO)
(72) Inventor: ALFHEIM, Gunnar, 5004 Bergen (NO); TANGEN, Hallvard, 5034 Bergen (NO); MAGNUSSEN, Stian, 5114 Tertnes (NO); NICOLAISEN, Alexander, 5015 Bergen (NO)
(74) Representative: Bryn Aarflot AS
(86) International application number: PCT/EP2022/073328
(87) International publication number: WO 2023/046387

(56) References cited:
- WO-A1-2011/128406
- US-B1- 6 437 326
- US-B2- 10 495 509

## Description

This invention relates to a cleaning system for measuring instruments measuring chosen characteristics of a gas or liquid medium contained in a pipe or container, especially for optical measuring probes for water, oil and/or gas flows.

Optical measurement technology utilizes various energy transfer methods for characterisation of gas, liquids and solids. Light and other electromagnetic radiation interact with atoms and molecules in discrete energy quantities and this behaviour can be applied to detect and quantify the presence of a particular substance of interest.

Using optical methods most often require the light source or the light emitting part as well as the detector or receiving part to be separated from the gas, liquid or matter of interest. Typically, a design incorporates an optical window to which serves as the interface to the liquid under observation.

The optical measurement apparatus can only perform well if their individual optical elements are kept clean of contamination and thus has always required periodic maintenance due to contaminants in air or in liquid. The media carries particles or contamination that deposits to any optical surface typically due to adhesion.

The present invention relates to a system for cleaning two or more windows in front of or on the side of an optical measuring probe being positioned in a fluid medium by actively removing deposits.

In performing measurements in multiphase flows such as water, oil and/or gas flows, it is a well known problem that deposits form on the probe surface being in contact with the flow. This is especially relevant for optical probes, e.g. performing fluorescence measurements in the flow, as the probes comprise a transparent window toward the flow. If this window is covered by deposits it must be cleaned before measurements may continue. This cleaning may be manually performed by removing the probe from the flow, but this may be impractical and time consuming, in some cases requiring a local shut down of the system.

Different methods have been applied to clean optical windows that are exposed for fouling. These include flushing (air or liquid), mechanical wipers, anti-fouling surface coatings and ultrasonics. All cleaning methods are likely to have some advantageous as well as negative side effects. Choice of method depends upon the type and degree of contaminant, required level of clean surface, the surface hardness (scratch resistance), complexity as well as cost issues.

Flushing methods require external utility like high pressure water or highpressure air, that require pumps and tubing. Air flushing only works for light degree of contamination and water flushing have challenges with heavy wear on all equipment including surface to be cleaned. Flushing methods in liquid a very much dampened compared to in air, as well as affected by on liquid flow rates

Cleaning technologies using mechanical wiper have a tendency of only remove the simplest contamination and are therefore not suitable for applications where heavy oil, wax, salt precipitation, hardscale can deposit onto an optical surface. Any faults in such solutions will also result in contamination being smeared across the optical surfaces, and therefore such solutions can require high level of maintenance for its mechanical parts.

Acoustic cleaning methods have several advantages. Ultrasonic cavitation has the advantages of possibilities of gentle cleaning in the high frequencies (> 70 kHz) as well as powerful in the low frequency domain, the cleaning systems have long lifetime, no moving parts and can be designed using relatively small piezo-electric parts for producing required vibrations. The typical design of mechanical parts is made to correspond to the vibrational resonance frequency in order to reduce power requirements
Such systems acoustic systems are well known, e.g. as described in WO2009/134145 and WO2008/015390 where the probe comprises a window through which optical measurements are performed and an acoustic signal causes vibrations in the window and thus deposits to be removed from the window, for example by causing cavitation in the liquid at the window, the liquid typically carrying particles and/or gas bobbles.

Acoustic cavitation is a potentially destructive cleaning effect, originating from rapid pressure change in a liquid where gas bubbles implode/collapse, producing high energy jet streams and high localized temperatures. This cleaning effect is commonly used in ultrasonic cleaners and other homogenizing equipment's.

Acoustic cavitation threshold is typically defined as the minimum negative pressure amplitude at which bubbles begin to oscillate or collapse. The pressure variations can be caused by one or more oscillating surfaces and the displacement amplitude and frequency of these surfaces control how much cavitation energy is released in the liquid.

WO2009/134145 also suggests the use of features extending outside the window to emit vibrations through the fluid without vibrating the window. This way a cavitation volume is defined between the acoustic source and the window. WO2011/128406 describes a solution related to WO2009/134145 where the vibrations are provided through a vibrating window, where a cavitation volume may be provided between the window and a mirror or opposing window in such a way that the vibrations in the cavitation volume also have a cleaning effect on the other optical components. The solution does, however, require a relatively small volume for the acoustic vibrations to have an effect as the amplitude of the vibrations in the cell naturally will decrease over the distance..

Another known solution for high pressure applications is a discussed in WO2014/111498 where the probe is retracted into a chamber where the pressure is reduced before for example directing acoustic energy through the cell to the window for cleaning. In WO2014/111498 the probe has a primary window for emitting an optical measuring signal into the fluid and a reflected at a distance from the window for returning the primary window. Another example of a measuring flow cell with acoustic cleaning is shown in US6426794 where the fluid passes through the cell with pipes and an acoustic transducer is positioned on top of the cell for coupling the acoustic signals to the housing. This invention describes using high frequency ultrasonic vibration and not ultrasonic cavitation, by aggregation of particulates, for these to be flushed away with the fluid flow.

Another acoustic cleaning method is known from US 6 437 326 B1.

Thus, it is an object of the present invention to provide efficient cleaning means for inline measurement devices using optical transmissive (through cell) methods being suitable for larger measuring cells increasing the measured volume The objects above are obtained using the solution according to the present invention as defined in the accompanying claims.

According to the present invention and as defined in claim 1 a solution is provided using direct ultrasonic cleaning on more than one surface or interface, where the cleaning effect on the interfaces are the same, thus providing optical measurement possibilities in cases where other cleaning methods are limited.

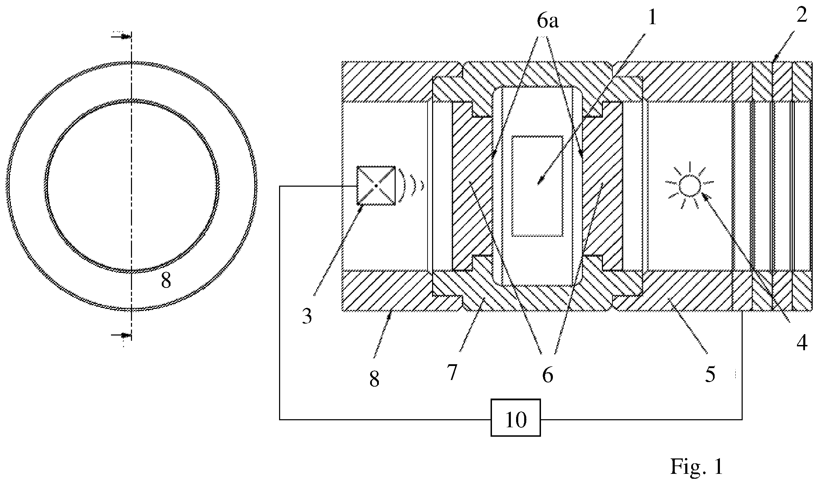

The invention provides a solution where the self-cleaning windows increases the flexibility when choosing optical components safely positioned behind the windows and away from any deposits or contamination, such as utilizing optical conversion/transformation behind second self-cleaning window, optical filtering, diffusers, beam shaping or frequency converting for improving the analytical applications,
The invention will be described more in detail below with reference to the accompanying drawings, illustrating the invention by way of examples, wherein: Figs. 1-3 illustrates three different embodiments of the present invention.

As is illustrated in the drawings the present invention is primarily based on an optical measuring instrument including a measuring cell 1 for containing or letting a fluid flow through it, being defined between two windows 6 each having one surface in contact with the fluid. The windows 6 being mounted in a holder 7. The instrument includes a light source 4 and a detector 3 being adapted to emit and receive light through said windows 6 within a wavelength range suitable for performing selected measurements, including measuring particles and/or the composition of the fluid in the cell 1. The measurement cell is preferably a channel in a probe being introduced into a fluid flow, e.g. as described in abovementioned WO2014/111498, but a closed sample cell may also be contemplated. The detector 3 may include or be connected to a processing unit 10 capable of analysing the received light and possibly controlling the acoustic transducers.

As is illustrated the detector 3 and light source 4 are preferably positioned in pipe sections 5,8 in the vicinity of the windows 6 and measuring cell 1, but other solutions, e.g. involving light guides making it possible to position the optoelectronic components further away from the cell 1. The optical components 3,4 may be any available type with requiring clean windows, such as absorption detectors for analysing the absorption spectrum of the fluids or for detecting or counting particles in a flow involving imaging means or point detectors, including reflectors, lenses, etc. As can alse be seen on the left side of the figures the probe usually has a circular cross section where the pipe sections 5,8 are hollow in order to contain the optical components 3,4.

According to the invention at least one transducer 2, preferably at least one piezoelectric transducer, is connected to the tubular pipe sections 5,7 for applying a vibration to the unit in the direction along the pipe sections and thus to the windows 6 with a direction essentially perpendicular to the window surfaces.

The figures illustrate two different positions of the transducer 2. In Figures 1 and 2 the transducer 2 is positioned on one side of the measuring cell 1 applying a vibration through the pipe section 5 wherein both windows 6 move the same way. In figure 3 the transducer 2 is positioned between the windows 6 and on opposite sides of the measurement cell 1, and thus the vibration of the windows will have opposite directions and providing a more compact solution. In the embodiment in both cases the vibrations are controlled so as to provide cavitation on both the window surfaces using one transducer.

The light propagates through windows 6 on each side of the cell 1, and as the windows are in contact with the measured fluid, deposits may appear of the window surfaces 6a disturbing the measurements. The windows 6 are preferably made from sapphire or similar materials being suitable for handling the fluid conditions such as temperature, composition and pressure, as well as withstanding the applied vibrations.

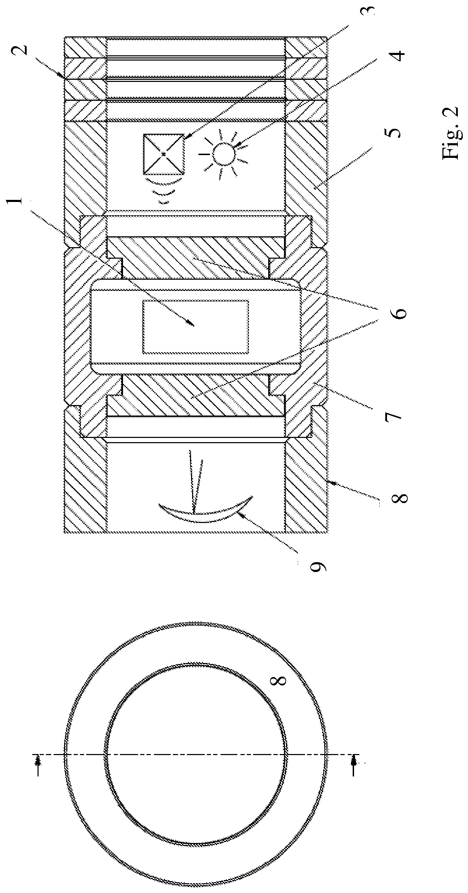

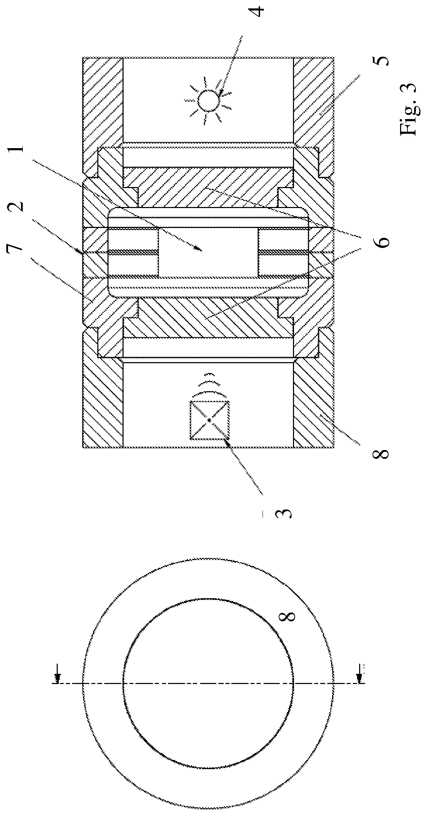

While figures 1 and 3 illustrates the measuring system being constituted by a light source and detector on opposite sides of the measuring cell 1, figure 2 illustrates an alternate solution where the detector and source are positioned on the same side of the cell with a mirror 9 on the opposite side. The light in this case passing through the cell twice, in some situations improving the quality of the measurements. An alternative to the embodiment in figure 2 a reflecting mirror can either replace or be part of the optical window on the opposite side of the measuring cell from the source 4 and receiver 3, e.g. making the surface reflecting.

The alternate embodiments in the drawings may of course be changed, e.g. combining the transducer between the windows in figure 3 with the optical solution in figure 2. The optical components such as emitter 4, receiver 3 and optical interfaces may include lenses and/or filters related to the measurements.

The probe according to the invention may provide measurements where the fluid in the measuring cell is dominated by gas or liquid, while the acoustic cleaning process is performed with a liquid is present at least at the cell windows or being the main component in the cell making it possible to obtain cavitation. The process may be performed while the probe is in place in a liquid flow or may be in a retract and clean unit, e.g. as illustrated in WO2014/111498, where the probe is retracted from the fluid flow, the cell may be filled with a suitable liquid and the vibrations are activated.

Thus the main aspect of the present invention is the utilization of a device using a single acoustic transducer to produce vibrations in the frequency range of 5 kHz - 1 MHz, tuning the vibrational oscillation between two mechanical coupled, optical windows 6, controlling and generating pressure waves inside the measurement cell 1 in the opening of an in-situ measurement probe, exceeding the cavitation threshold of a liquid on the windows in the cell, to clean the surface of two or more optical surfaces, for an optical measurement apparatus.

In order to maximize the effect of the vibrations the optical interfaces in contact with the fluid are provided with a movement perpendicular to the surface, maximizing the amplitude of the movement, either moving in the same direction or in opposite directions as a response to the same generated acoustic signal. Preferably they move at the same amplitude as well as frequency, achieving the same cleaning effect.

The acoustic design that produces mechanical vibrations coupled to two or more optical surfaces, having equal vibration amplitude and cleaning energy, to remove any contamination deposited on window surfaces and possibly other elements exposed to the liquid. The benefit of having a controlled and equal cleaning energy on all optical surfaces is to prevent excess destructive cavitation damage on one or more surfaces.

To achieve equal cleaning energy for the optical surfaces, the optical surfaces may be mechanically positioned to operate at a fixed acoustic frequency, or the cleaning system will vary the operating frequency to maintain equal amplitude and cleaning energy to all surfaces at different times.

The present invention thus relates to utilizing one, but not limited to one ultrasonic transducer 2 preferably having one or more piezo-electric elements connected to a control unit to produce electromechanical vibrations.

Coupling mechanics is used for transferring mechanical waves from the piezo-electrical elements 2 suitable elements such as pipe sections 5,8 or similar acoustic waveguides to two or more connected optical surfaces, which will oscillate either in controlled successive turns providing required reduction of pressure inside liquid, but also at surfaces of the optical interface inside liquid, causing controlled cavitation and shock waves to occur.

Alternatively, the coupling mechanics are used for transferring mechanical waves from piezo-electrical elements to the optical surfaces, which will oscillate in controlled phase modes providing maximum pressure variations inside liquid at the surfaces of the optical interface inside liquid, causing controlled cavitation and shock waves to occur at the surfaces.

To summarize the present invention relates to a self-cleaning probe for performing optical measurements in a fluid, gas and/or liquid, flow. The probe comprises a measuring cell defining a passage for the fluid to be measured to pass through, the probe including at least a first and second optical interface on opposite sides of the passage, both being in direct contact with the content of the cell and possible deposits and contamination on the surfaces. The probe also comprises an optical source emitting an optical signal and a receiver for receiving optical signals having propagated partly, fully or multiple times through the fluid flow from the first to the second optical interface.

All of the optical interfaces in contact with the fluid along the optical beam path are acoustically coupled to at least one acoustic transducer connected to a power source. The transducer is adapted to produce vibrations in the frequency range of 5kHz-1MHz where the vibrations have a direction being substantially perpendicular to the plane of the optical interfaces. The acoustic energy of the vibrations is chosen so as to exceed the cavitation threshold when said fluid is a known liquid present in the measuring cell, so as to remove deposits on the optical interfaces.

Preferably the measuring cell includes the first and second optical interfaces being acoustically connected to each other through the passage walls, the acoustic transducer being acoustically connected to one of the interfaces, the produced vibrations having the same direction in both interfaces. The transducer may be cylindrical, defining a coaxial space containing optical components such as source, receiver or light guides related to the optical measurements

Alternatively, the acoustic transducer is mounted in the passage wall between the optical interfaces, the produced vibrations in the interfaces having opposite directions.

The optical interfaces are windows being transparent in the range used by the optical measurements or the optical signal travel from emitter side at first interface window, through at least the first window and measuring cell and is reflected back from reflective optics being positioned behind second window interface, returning to an optical receiver positioned at the first interface side, together with the emitter.

Transducer is preferably constituted by at least one piezoelectric element connected to a control or processing unit which also may be connect to the light detector. The acoustic transducer or control unit may thus be configured to adjust the emitted energy, frequency and/or amplitude, until the optical receiver detects that the deposits have been removed. Alternatively, the transducer is configured to operate at one or two predetermined fixed frequencies with a predetermined amplitude.

The optical receiver may be adapted to recognize reflections or backscatter from deposits on the optical interfaces and to initiate production of the vibration and thus the cleaning process, and to stop them when the reflections or backscatter are within a predetermined limit.

The probe preferably has an elongated shape with an axial direction extending into the fluid flow and the passage for the liquid has a direction being essentially perpendicular to the probe axis. Also, the transducers generating the vibrations will preferably be positioned symmetrically relative to the probe axis, transmitting longitudinal vibrations along the probe axis.

## Claims

1. Self-cleaning probe for use in optical measurements in a flow containing a known liquid, the probe comprising a measuring cell (1) defining a passage for the liquid to be measured to pass through, the probe including at least a first and second optical interface (6) on opposite sides of the passage, both being in communication with the known liquid, the probe comprising at least one optical light source (4) emitting an optical signal and a detector (3) for receiving an optical signal having propagated partly or fully through the liquid flow from the first to the second interface,
wherein the optical interfaces are mechanically and acoustically coupled to each other and are acoustically coupled to at least one acoustic transducer (2) connected to a power source, adapted to produce vibrations in the frequency range of 5kHz-1MHz, the vibrations being substantially perpendicular to the plane of the interfaces (6), so that, when in use, the acoustic energy of the vibrations of the optical interfaces exceeds the cavitation threshold in the known liquid, so as to remove deposits on the optical interfaces.

2. Probe according to claim 1, wherein the first and second optical interfaces are acoustically connected to each other through the passage walls, the at least one acoustic transducer being acoustically connected to one of the interfaces, the produced vibrations having the same direction in both interfaces.

3. Probe according to claim 2, wherein the at least one acoustic transducer is cylindrical, defining a coaxial space containing optical components such as source, receiver or light guides related to the optical measurements

4. Probe according to claim 1, wherein the at least one acoustic transducer is mounted in the passage wall between the optical interfaces, the produced vibrations in the interfaces having opposite directions.

5. Probe according to claim 1, wherein both optical interfaces are surfaces on windows being transparent in the range used by the optical measurements.

6. Probe according to claim 1, wherein an optical signal travels from source side at first interface window, through two windows and is reflected from optical components being positioned behind second window interface, returning to the optical detector positioned at the first interface side, together with the source.

7. Probe according to claim 1, wherein the at least one acoustic transducer is constituted by at least one piezoelectric element connected to a control unit.

8. Probe according to claim 1, wherein the optical detector is adapted to recognize reflections or backscatter from deposits on the optical interfaces and to initiate production of the vibration and thus the cleaning process, and to stop them when the reflections or backscatter are within a predetermined limit.

9. Probe according to claim 8, wherein the at least one acoustic transducer is configured to adjust the emitted energy, frequency and/or amplitude, until the optical receiver detects that the deposits have been removed.

10. Probe according to claim 1, wherein the at least one acoustic transducer is configured to operate at a predetermined fixed frequency with equal but adjustable amplitude.

11. Probe according to claim 1, wherein the at least one acoustic transducer is configured to operate at least two frequencies with equal but adjustable amplitude.

12. Probe according to claim 1, wherein the probe has an elongated shape with an axial direction and the passage for the liquid has a direction being essentially perpendicular to the probe axis.

13. Probe according to claim 1, where the probe has an elongated shape with an axial direction and the at least one acoustic transducer is positioned symmetrically relative to the probe axis, transmitting longitudinal vibrations along the probe axis.

## Patentansprüche

1. Selbstreinigende Sonde zur Verwendung bei optischen Messungen in einem Strom, der eine bekannte Flüssigkeit enthält, wobei die Sonde eine Messzelle (1) umfasst, die einen Durchgang für die zu messende Flüssigkeit definiert, wobei die Sonde mindestens eine erste und eine zweite optische Grenzfläche (6) auf gegenüberliegenden Seiten des Durchgangs einschließt, die beide mit der bekannten Flüssigkeit in Verbindung stehen, wobei die Sonde mindestens eine optische Lichtquelle (4), die ein optisches Signal aussendet, und einen Detektor (3) zum Empfangen eines optischen Signals umfasst, das sich teilweise oder vollständig durch den Flüssigkeitsstrom von der ersten zur zweiten Grenzfläche ausgebreitet hat,
wobei die optischen Grenzflächen mechanisch und akustisch miteinander gekoppelt sind und akustisch mit mindestens einem akustischen Wandler (2) gekoppelt sind, der mit einer Stromquelle verbunden ist, die geeignet ist, Schwingungen im Frequenzbereich von 5 kHz bis 1 MHz zu erzeugen, wobei die Schwingungen im Wesentlichen senkrecht zur Ebene der Grenzflächen (6) sind, so dass die akustische Energie der Schwingungen der optischen Grenzflächen im Gebrauch die Kavitationsschwelle in der bekannten Flüssigkeit übersteigt, um Ablagerungen an den optischen Grenzflächen zu entfernen.

2. Sonde nach Anspruch 1, wobei die erste und die zweite optische Grenzfläche durch die Durchgangswände akustisch miteinander verbunden sind, wobei der mindestens eine akustische Wandler mit einer der Grenzflächen akustisch verbunden ist und die erzeugten Schwingungen in beiden Grenzflächen die gleiche Richtung aufweisen.

3. Sonde nach Anspruch 2, wobei der mindestens eine akustische Wandler zylindrisch ist und einen koaxialen Raum definiert, der optische Komponenten wie Quelle, Empfänger oder Lichtleiter für die optischen Messungen enthält.

4. Sonde nach Anspruch 1, wobei der mindestens eine akustische Wandler in der Durchgangswand zwischen den optischen Grenzflächen montiert ist, wobei die erzeugten Schwingungen in den Grenzflächen entgegengesetzte Richtungen aufweisen.

5. Sonde nach Anspruch 1, wobei beide optischen Grenzflächen Oberflächen auf Fenstern sind, die in dem für die optischen Messungen verwendeten Bereich transparent sind.

6. Sonde nach Anspruch 1, wobei ein optisches Signal von der Quellenseite am ersten Grenzflächenfenster durch zwei Fenster läuft und von optischen Komponenten hinter der zweiten Fenstergrenzfläche reflektiert wird und zusammen mit der Quelle zu dem optischen Detektor, der an der ersten Grenzflächenseite angeordnet ist, zurückkehrt.

7. Sonde nach Anspruch 1, wobei der mindestens eine akustische Wandler durch mindestens ein piezoelektrisches Element gebildet wird, das mit einer Steuereinheit verbunden ist.

8. Sonde nach Anspruch 1, wobei der optische Detektor geeignet ist, Reflexionen oder Rückstreuungen von Ablagerungen auf den optischen Grenzflächen zu erkennen und die Erzeugung der Vibration und damit den Reinigungsvorgang einzuleiten, bzw. zu stoppen, wenn die Reflexionen oder Rückstreuungen innerhalb eines vorgegebenen Grenzwertes liegen.

9. Sonde nach Anspruch 8, wobei der mindestens eine akustische Wandler so konfiguriert ist, dass er die emittierte Energie, Frequenz und/oder Amplitude anpasst, bis der optische Empfänger erkennt, dass die Ablagerungen entfernt wurden.

10. Sonde nach Anspruch 1, wobei der mindestens eine akustische Wandler so konfiguriert ist, dass er bei einer vorgegebenen festen Frequenz mit gleicher, aber einstellbarer Amplitude arbeitet.

11. Sonde nach Anspruch 1, wobei der mindestens eine akustische Wandler so konfiguriert ist, dass er mindestens zwei Frequenzen mit gleicher, aber einstellbarer Amplitude bedient.

12. Sonde nach Anspruch 1, wobei die Sonde eine längliche Form mit axialer Richtung aufweist und der Durchgang für die Flüssigkeit eine Richtung aufweist, die im Wesentlichen senkrecht zur Sondenachse verläuft.

13. Sonde nach Anspruch 1, wobei die Sonde eine längliche Form mit einer axialen Richtung aufweist und der mindestens eine akustische Wandler symmetrisch zur Sondenachse angeordnet ist und Längsschwingungen entlang der Sondenachse überträgt.

## Revendications

1. Sonde autonettoyante pour utilisation pour des mesures optiques dans un flux contenant un liquide connu, la sonde comprenant une cellule de mesure (1) définissant un passage pour le liquide à mesurer, la sonde comportant au moins une première et une seconde interface optique (6) sur les côtés opposés du passage, toutes deux en communication avec le liquide connu, la sonde comprenant au moins une source de lumière optique (4) émettant un signal optique et un détecteur (3) pour recevoir un signal optique s'étant propagé partiellement ou totalement à travers le flux de liquide de la première à la seconde interface,
dans laquelle les interfaces optiques sont accouplées mécaniquement et couplées acoustiquement l'une à l'autre et sont couplées acoustiquement à au moins un transducteur acoustique (2) connecté à une source d'énergie, adapté pour produire des vibrations dans la gamme de fréquences de 5 kHz à 1 MHz, les vibrations étant sensiblement perpendiculaires au plan des interfaces (6), de sorte que, lors de l'utilisation, l'énergie acoustique des vibrations des interfaces optiques dépasse le seuil de cavitation dans le liquide connu, afin d'éliminer les dépôts sur les interfaces optiques.

2. Sonde selon la revendication 1, dans laquelle la première et la seconde interface optique sont connectées acoustiquement l'une à l'autre par les parois de passage, l'au moins un transducteur acoustique étant connecté acoustiquement à l'une des interfaces, les vibrations produites ayant la même direction dans les deux interfaces.

3. Sonde selon la revendication 2, dans laquelle l'au moins un transducteur acoustique est cylindrique, définissant un espace coaxial contenant des composants optiques tels que la source, le récepteur ou les guides de lumière liés aux mesures optiques.

4. Sonde selon la revendication 1, dans laquelle l'au moins un transducteur acoustique est monté dans la paroi de passage entre les interfaces optiques, les vibrations produites dans les interfaces ayant des directions opposées.

5. Sonde selon la revendication 1, dans laquelle les deux interfaces optiques sont des surfaces sur des fenêtres transparentes dans le domaine utilisé par les mesures optiques.

6. Sonde selon la revendication 1, dans laquelle un signal optique se déplace du côté de la source à la première fenêtre d'interface, à travers deux fenêtres et est réfléchi par les composants optiques positionnés derrière la seconde fenêtre d'interface, revenant au détecteur optique positionné du côté de la première interface, en même temps que la source.

7. Sonde selon la revendication 1, dans laquelle l'au moins un transducteur acoustique est constitué d'au moins un élément piézoélectrique relié à une unité de commande.

8. Sonde selon la revendication 1, dans laquelle le détecteur optique est adapté pour reconnaître les réflexions ou la rétrodiffusion des dépôts sur les interfaces optiques et pour déclencher la production de la vibration et donc le processus de nettoyage, et pour les arrêter lorsque les réflexions ou la rétrodiffusion se situent dans une limite prédéterminée.

9. Sonde selon la revendication 8, dans laquelle le transducteur acoustique au moins est configuré pour ajuster l'énergie émise, la fréquence et/ou l'amplitude, jusqu'à ce que le récepteur optique détecte que les dépôts ont été éliminés.

10. Sonde selon la revendication 1, dans laquelle l'au moins un transducteur acoustique est configuré pour fonctionner à une fréquence fixe prédéterminée avec une amplitude égale mais réglable.

11. Sonde selon la revendication 1, dans laquelle l'au moins un transducteur acoustique est configuré pour fonctionner à au moins deux fréquences avec une amplitude égale mais réglable.

12. Sonde selon la revendication 1, dans laquelle la sonde a une forme allongée avec une direction axiale et le passage pour le liquide a une direction essentiellement perpendiculaire à l'axe de sonde.

13. Sonde selon la revendication 1, dans laquelle la sonde a une forme allongée avec une direction axiale et l'au moins un transducteur acoustique est positionné symétriquement par rapport à l'axe de sonde, transmettant des vibrations longitudinales le long de l'axe de sonde.
